# EUROPÄISCHE PATENTANMELDUNG

(11) **EP 1 870 444 A2**
(43) Veröffentlichungstag der Anmeldung: **26.12.2007**
(21) Anmeldenummer: 07012086.0
(22) Anmeldetag: 20.06.2007
(51) Int. Cl.: C10J 3/84

(54) **Verfahren zur Reinigung von Gasen aus einem Holzvergaser und Filter hierfür**

(30) Priorität: 20.06.2006 DE 102006028293
(71) Anmelder: Kuntschar, Walter, 34466 Wolfhagen-Ippinghausen (DE)
(72) Erfinder: Kuntschar, Walter, 34466 Wolfhagen-Ippinghausen (DE)
(74) Vertreter: WALTHER, WALTHER & HINZ Patentanwälte - European Patent Attorneys

(57) **Zusammenfassung**

Gegenstand der Erfindung ist ein Verfahren zum Reinigen von Produktgas aus einem Gleichstromholzvergaser. Ein Verfahren zur Reinigung von Gas aus einem Holzvergaser zu schaffen, welches das Produktgas zuverlässig und kostengünstig reinigt, so dass das Produktgas in einem Verbrennungsmotor eingesetzt werden kann, ohne dass dieser über Gebühr beschädigt wird, wird dadurch erreicht, dass das aus dem Vergaser austretende Produktgas direkt in einen hochtemperaturfesten, keramischen Filter geleitet und dort gereinigt wird, bevor es anschließend auf Solltemperatur abgekühlt wird.

## Beschreibung

Die vorliegende Erfindung betrifft ein Verfahren zur Reinigung von Produktgas aus einem Holzvergaser gemäß dem Oberbegriff des Anspruches 1 und einen Gleichstromholzvergaser mit einem Filter hierfür gemäß dem Oberbegriff des Anspruches 4, sowie ein Verfahren zur Reinigung des Filters gemäß dem Oberbegriff des Anspruches 9.

Bei der Holzvergasung, insbesondere mittels einem drucklosen, autothermen Gleichstromvergaser, der nach dem Verfahren der vollkommenen Reduktion der Oxidationsprodukte zu Produktgas arbeitet, fallen mit dem erzeugten Produktgas kontinuierlich Holzasche, Holzkohlenstaub und Holzkohlengrus an. Auch können sich im Gas noch Teer- oder Pyrolyserückstände befinden. Alle diese Verunreinigungen beschädigen den Verbrennungsmotor, in dem das Produktgas verwertet wird.

Davon ausgehend liegt der vorliegenden Erfindung die Aufgabe zu Grunde, ein Verfahren und einen Filter zur Reinigung von Produktgas aus einem Gleichstromholzvergaser zu schaffen, der das Produktgas zuverlässig und kostengünstig reinigt, so dass das Produktgas im Verbrennungsmotor eingesetzt werden kann, ohne dass dieser über Gebühr beschädigt wird.

Als erste technische Lösung dieser Aufgabe wird erfindungsgemäß ein Verfahren gemäß den Merkmalen des Anspruches 1 vorgeschlagen. Vorteilhafte Weiterbildungen dieses Verfahrens sind den jeweiligen Unteransprüchen zu entnehmen.

Ein nach dieser technischen Lehre ausgebildetes Verfahren zur Reinigung von Produktgas aus einem Holzvergaser hat den Vorteil, dass das Produktgas unmittelbar nach Verlassen des Vergasers gereinigt wird, so dass das Produktgas zu diesem Zeitpunkt noch eine vergleichsweise hohe Temperatur von 500°C bis 800°C besitzt. Das Verharren des Produktgases im Hochtemperaturbereich hat den Vorteil, dass dem Produktgas mehr Zeit zum Ablauf von chemischen Reaktionen zur Verfügung steht, so dass zum Beispiel im Produktgas verbliebene Teerdestillate oder Pyrolyserückstände weiter abgebaut werden. Im Ergebnis erfolgt also eine mechanische Ausfilterung von Holzasche, Holzkohlenstaub, Holzkohlengrus oder anderen Schmutzpartikeln und gleichzeitig eine chemische Reinigung durch Verminderung der Teerdestillate und Pyrolyserückstände.

Als weitere technische Lösung dieser Aufgabe wird erfindungsgemäß ein Gleichstromholzvergaser mit den Merkmalen des Anspruches 4 vorgeschlagen. Vorteilhafte Weiterbildungen dieses Gleichstromholzvergasers sind den jeweiligen Unteransprüchen zu entnehmen.

Ein nach dieser technischen Lehre ausgebildeter Gleichstromholzvergaser hat den Vorteil, dass durch den Einsatz eines Filters mit hochtemperaturfesten, keramischen Filterkerzen das aus dem Vergaser austretende Produktgas unmittelbar in den Filter gelangen und sofort gefiltert werden kann, so dass das Produktgas noch eine Betriebstemperatur von 500 °C und mehr besitzt. Hierdurch verweilt das Produktgas länger bei vergleichsweise hohen Temperaturen, so dass bereits begonnene und neue chemische Reaktionen ablaufen können, um Teere, Pyrolyserückstände und andere Verunreinigungen aus dem Produktgas zu eliminieren.

Ein weiterer Vorteil besteht darin, dass durch den Einsatz von Filterkerzen eine sehr große Oberfläche geschaffen wird, über die einerseits eine gute Reinigung des Produktgases erfolgt und die andererseits aufgrund der großen Fläche nur ein relativ geringer Strömungswiderstand erzeugt, so dass der Filter ohne Einsatz eines weiteren Gebläses oder einer Saugvorrichtung auskommt. Letzteres reduziert die Herstellungskosten und erhöht die Energiebilanz des gesamten Vergasersystems.

Dabei hat es sich als vorteilhaft erwiesen, in der Filterkerze eine feingewebte Filtermatte aus Si02 zu verwenden. Diese Si02 Filtermatte ist bis 1.300 °C hitzebeständig und filtert etwaige vorhandene Holzasche, Holzkohlenstaub oder Holzkohlengrus aus dem aus dem Vergaser kommenden Produktgas zuverlässig aus.

In einer bevorzugten Ausführungsform ist an der Unterseite des Gehäuse unterhalb des Gaseintrittsöffnung ein kegelförmiges Unterteil vorgesehen.

Dieses kegelförmige Unterteil wirkt dabei analog zu einem Zyklon. Dabei wird das einströmende Produktgas in eine kreisförmige Bewegung versetzt, so dass sich ein Teil der im Produktgas befindlichen Verunreinigungen am Boden des Unterteiles absetzt. Um die in dem kegelförmigen Unterteil gesammelten Verunreinigung entnehmen zu können, ist am tiefsten Punkt des Unterteils eine gasdicht verschließbare Entleerungsklappe vorgesehen.

In einer weiteren, bevorzugten Ausführungsform ist das Gehäuse hochkant angeordnet und über drei oder vier Stützen abgestützt. Hierdurch ist eine optimale Nutzung des als Zyklon wirkenden Unterteils möglich.

Durch die freistehende Anordnung kann der Hochtemperaturfilter bei Bedarf auch gekippt werden, insbesondere wenn Wartungs- oder Reinigungsarbeiten erforderlich sind.

Nach einer gewissen Betriebsdauer haben sich an den Filterkerzen schmutzseitig so viele Schmutzpartikel abgesetzt, dass die Filterkerzen keine ausreichende Durchlässigkeit mehr aufweisen. Nun müssen die Filterkerzen gereinigt werden.

In einer anderen, bevorzugten Ausführungsform sind zu diesem Zweck Lanzen vorgesehen, die in das Innere der Filterkerze hineinreichen und mittels derer Druckluft von der sauberen Seite in die Filterkerze eingeblasen werden kann. Mittels dieser Druckluft werden die schmutzseitig anhaftenden Schmutzpartikel gelöst und können über die Entleerungsklappe entsorgt werden.

Bei der Verwendung hochtemperaturfester, keramischer Filterkerzen in einem Gleichstromholzvergaser kann es jedoch vorkommen, dass die Reinigung der Filterkerzen zu einem Zeitpunkt durchgeführt werden muss, an dem die Filterkerzen noch eine sehr hohe Temperatur aufweisen. Wird dann die Filterkerze mit Druckluft beaufschlagt, so kann, verursacht durch den plötzlichen Impuls und die auftretenden Kräfte, die keramische Filtermatte reißen.

Ein weiteres Problem besteht darin, dass bei der Verwendung von Umgebungsluft als Druckluft dem Produktgas eine gewisse Menge Sauerstoff zugeführt wird. Dies birgt die Gefahr, dass dann aus dem Produktgas ein explosionsfähiges Gasgemisch wird.

Davon ausgehend liegt der Erfindung die Aufgabe zugrunde, ein Verfahren zum Reinigen des Filters zu schaffen, welches die keramischen Filterkerzen auch bei höchsten Temperaturen zerstörungsfrei reinigt und die Bildung von explosionsfähigem Gas vermeidet.

Als technische Lösung dieser Aufgabe wird erfindungsgemäß ein Verfahren zum Reinigen des Filters mit den Merkmalen des Anspruches 9 vorgeschlagen. Vorteilhafte Weiterbildungen dieses Verfahrens sind den jeweiligen Unteransprüchen zu entnehmen.

Ein nach dieser technischen Lehre ausgebildetes Verfahren hat den Vorteil, dass während des Reinigungsprozesses durch das annährend gleichzeitige absaugen von Produktgas auf der Schmutzseite und das einbringen von Produktgas auf der sauberen Seite keine Druckdifferenz zwischen der schmutzigen und der sauberen Seite der Filterkerzen entsteht. Folglich entfällt erfindungsgemäß der durch die Druckluft verursachte, plötzliche Druckanstieg und damit einhergehend der auf die Filtermatte wirkende Impuls, genauso wie die durch die Druckluft auftretende Druckdifferenz, durch die die Filtermatte mit mechanischen Kräften beaufschlagt wird.

Die Verwendung von gereinigtem Produktgas auf der sauberen Seite der Filterkerzen hat den Vorteil, im Filter kein explosions- oder zündfähiges Gas entsteht, da ausschließlich Produktgas eingesetzt wird und da somit der die Zusammensetzung des Gases nicht verändert wird.

In einer bevorzugten Weiterbildung wird das Produktgas pulsartig abgesaugt. Dies hat den Vorteil, durch das unterschiedlich starke Absaugen an den Filtermatten ein dynamischer Effekt eintritt, der die Schmutzpartikel besser ablöst.

Weitere Vorteile des erfindungsgemäßen Verfahrens zum Reinigen des Produktgases, des erfindungsgemäßen Gleichstromvergasers und des erfindungsgemäßen Verfahrens zur Reinigung des Filters ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine Seitenansicht eines erfindungsgemäßen Hochtemperaturfilters;
- Fig. 2: eine Draufsicht auf den Hochtemperaturfilter gemäß Fig. 1 ohne Deckel;
- Fig. 3: eine Draufsicht auf das Gehäuse des Hochtemperaturfilters gemäß Fig. 1, ohne die Filterkerzen.

Das in einem Holzvergaser erzeugte Gas wird zur Verbrennung in einem Verbrennungsmotor genutzt, wobei unter anderem elektrischer Strom hergestellt wird. Damit das Gas im Verbrennungsmotor wirtschaftlich verarbeitet werden kann, müssen vorher im Gas befindliche Verunreinigungen wie zum Beispiel Holzasche, Holzkohlenstaub oder Holzkohlengrus entfernt werden und das Gas muss auf eine Solltemperatur von 60°C bis 70°C abgekühlt werden. Dieser Ablauf wird nachfolgend näher geschildert:
Aus dem Vergaser kommt das Produktgas mit einer Temperatur von 1000°C bis 1200°C und wird direkt in einen hochtemperaturfesten Filter geleitet. In diesem Filter wird das Gas von Schmutzpartikeln, wie zum Beispiel Holzasche, Holzkohlenstaub oder Holzkohlengrus befreit. Dabei hat das Gas immer noch eine Temperatur von 500°C bis 800°C, je nach Massenfluss und anderen Parametern. Nachdem das Gas gefiltert ist, wird es in einem Wärmetauscher auf 60°C bis 70°C herabgekühlt, bevor es zur eigentlichen Verbrennung in den Verbrennungsmotor gelangt.

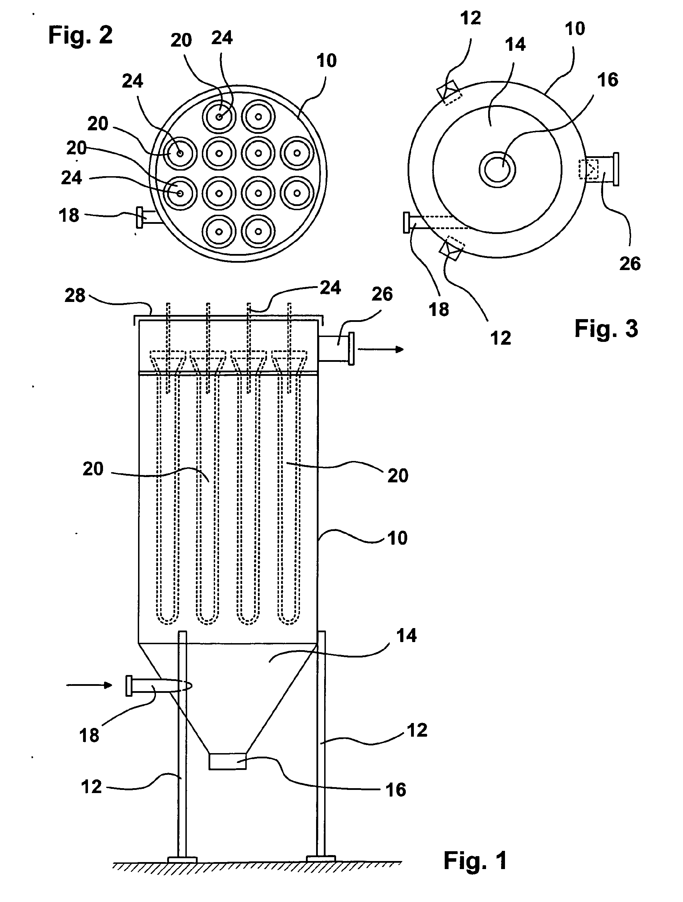

Der in Figuren 1 bis 3 dargestellte Filter wird zur Reinigung des heißen Produktgases eines Holzvergasers eingesetzt. Dieser Holzvergaser kann z. B. ein drucklos arbeitender Gleichstromvergaser sein, der autotherm arbeitet und nach dem Verfahren der vollkommenen Reduktion der Oxidationsprodukte arbeitet. Dabei fallen mit dem erzeugten Gas kontinuierlich Holzasche und/oder Holzkohlenstaub bzw. Holzkohlengrus an, welche vom Filter herausgefiltert werden sollen, auch wenn das aus dem Holzvergaser kommende Gas Temperaturen von 500°C bis 700°C und mehr aufweist.

Dieser Filter besitzt ein im Wesentlichen vertikal angeordnetes Gehäuse 10, welches auf drei Stützen ruht. An der Unterseite des Gehäuses 10 ist ein kegelförmiges Unterteil 14 angeschlossen, deren spitze Seite nach unten zeigt. Am tiefsten Punkt des Unterteils 14 ist eine gasdicht verschließbare Entleerungsklappe 16 angeordnet. Am oberen Rand des Unterteils 14, also unter dem eigentlichen Gehäuse 10, ist eine Gaseintrittsöffnung vorgesehen, durch die das aus dem Holzvergaser kommende Gas in den Filter eintritt.

In dem hochkant angeordneten Gehäuse 10 sind in dieser Ausführungsform insgesamt zwölf Filterkerzen 20 vorgesehen, welche über eine Halteplatte 22 in ihrer definierten Position gehalten werden. Dabei ist die Halterplatte 22 derart gasdicht ausgebildet, dass das Gas zwingend seinen Weg über die Filterkerzen 20 nehmen muss.

Die Filterkerzen 20 sind im Wesentlichen zylindrisch ausgebildet, wobei die eigentliche Filtermatte aus einer feingewebten Si02 Filzmatte besteht, welche eine Temperaturbelastung von bis etwa 1.300 °C standhält. An ihrer oberen Stirnseite sind die Filterkerzen 20 offen ausgebildet, wobei in diese Öffnung eine Lanze 24 ins Innere der Filterkerze 20 hineinreicht. Mittels dieser Lanze 24 kann Druckluft ins Innere der Filterkerze 20 geblasen werden, um diese zu reinigen.

Oberhalb der Filterkerzen 20 ist eine Gasaustrittsöffnung 26 vorgesehen, aus der das gereinigte Gas zur Weiterleitung in den Wärmetauscher aus dem Filter austreten kann.

An seiner Oberseite ist das Gehäuse 10 durch einen Deckel 28 gasdicht verschlossen.

Nachfolgend wird der Ablauf der Gasreinigung detailliert beschrieben: Das aus dem Vergaser kommende Produktgas gelangt mit einer Temperatur von ca. 500 °C bis 600 °C über die Gaseintrittsöffnung 18 in das Gehäuse 10 des Filters. In dem im Querschnitt runden Gehäuse 10 und insbesondere in dem kegelförmig ausgebildeten Unterteil 14, wird das eintretende Produktgas in eine Kreisbewegung gezwungen. Dabei fungiert das Unterteil 14 wie ein Zyklon, so dass sich hier bereits grobe Schmutzpartikel absetzen können.

Aufgrund der Saugwirkung des sich an den Hochtemperaturfilter anschließenden Verbrennungsmotors wird das Produktgas im Wesentlichen nach oben geleitet und durch die feingewebten Si02 Filzmatten der Filterkerzen 20 gezogen. Dabei bleiben im Gas befindliche Holzaschepartikel, Holzkohlenstaub oder Holzkohlengrus an der feingewebten Si02 Filzmatte der Filterkerzen 20 hängen, so dass das Produktgas von hier an gereinigt ist. Über die Gasaustrittsöffnung 26 verlässt das Produktgas dann den Filter und wird einem Verbrennungsmotor zur Erzeugung von elektrischem Strom zugeführt.

Nach einer gewissen Zeit sind die Filterkerzen verschmutzt und müssen gereinigt werden. Hierzu wird die am unteren Ende des Unterteils 14 befindliche Entleerungsklappe 16 geöffnet, so dass die im Unterteil 14 gesammelten Schmutzpartikel herausfallen können. Anschließend wird über die in die Filterkerzen 20 hineinreichenden Lanzen 24 Druckluft aufgebracht, so dass sich in der Si02 Filzmatte gesammelten Schmutzpartikel lösen und ebenfalls nach unten herunterfallen und so aus dem Filter herausgelangen. Nachdem die Reinigung beendet ist, wird die Entleerungsklappe 16 wieder geschlossen und die Gasreinigung kann fortgesetzt werden.

In einer anderen, hier nicht dargestellten Ausführungsform werden die Filterkerzen dadurch gereinigt, dass ein am unteren Ende des Unterteiles angebrachter Pulsator ungereinigtes Produktgas aus dem Filter absaugt, welches sich noch auf der schmutzigen Seite der Filterkerzen befindet. Gleichzeitig wird auf der sauberen Seite der Filterkerzen zu einem früheren Zeitpunkt gereinigtes Produktgas in dem Masse eingebracht, wie der Pulsator Produktgas absaugt. Somit wird eine Druckdifferenz zwischen der sauberen und der Schmutzigen Seite im Filter vermieden. Durch dieses Verfahren werden die Filtermatten in umgekehrter Richtung mit Produktgas durchströmt, so dass sich die an den Filtermatten anhaftenden Schmutzpartikel lösen und in das Unterteil des Gehäuses fallen und von dort ausgetragen werden. Dabei erfolgt das Absaugen pulsartig, so dass die Filtermatten unterschiedlich stark mit Produktgas durchströmt werden.

### Bezugszeichenliste:

- 10: Gehäuse
- 12: Stützen
- 14: Unterteil
- 16: Entleerungsklappe
- 18: Gaseintrittsöffnung
- 20: Filterkerzen
- 22: Halteplatte
- 24: Lanze
- 26: Gasaustrittsöffnung
- 28: Deckel

## Patentansprüche

1. Verfahren zum Reinigen von Produktgas aus einem Holzvergaser
**dadurch gekennzeichnet,**
**dass** das aus dem Holzvergaser austretende Produktgas wird direkt in einen hochtemperaturfesten Filter geleitet und dort gereinigt, bevor es anschließend auf Solltemperatur abgekühlt wird.

2. Verfahren nach Anspruch 1,
**dadurch gekennzeichnet,**
**dass** das Produktgas im Filter eine Temperatur von 500°C bis 800°C, vorzugsweise 600°C bis 700°C, aufweist.

3. Verfahren nach einem der vorangehenden Ansprüche,
**dadurch gekennzeichnet,**
**dass** die Solltemperatur zwischen 50°C und 80°C, vorzugsweise zwischen 60°C und 70°C beträgt.

4. Gleichstromholzvergaser mit einem Filter zur Reinigung des Produktgases, wobei der Filter ein gasdichtes Gehäuse (10) mit einer Gaseintrittsöffnung (18) und einer Gasaustrittsöffnung (26) umfasst, wobei zwischen der Gaseintrittsöffnung (18) und der Gasaustrittsöffnung (26) eine Anzahl von Filterkerzen vorgesehen sind,
**dadurch gekennzeichnet,**
**dass** der Filter so angeordnet ist, dass das aus dem Vergaser kommende Produktgas direkt in den Filter gelangt und dass die Filterkerzen als hochtemperaturfeste Keramik-Filterkerzen () ausgebildet sind.

5. Filter nach Anspruch 4,
**dadurch gekennzeichnet,**
**dass** die Filterkerze (20) eine fein gewebte SiO2-Filtermatte aufweist.

6. Filter nach einem der vorangehenden Ansprüche,
**dadurch gekennzeichnet,**
**dass** sich an einer Unterseite des Gehäuses (10) unterhalb der Gaseintrittsöffnung (18) ein kegelförmiges Unterteil (14) anschließt.

7. Filter nach Anspruch 6,
**dadurch gekennzeichnet,**
**dass** am tiefsten Punkt des Unterteiles (14) eine gasdicht verschließbare Entleerungsklappe (16) vorgesehen ist.

8. Filter nach einem der vorangehenden Ansprüche,
**dadurch gekennzeichnet,**
**dass** in die Filterkerze (20) eine mit Druckluft beaufschlagbare Lanze (24) hineinreicht.

9. Verfahren zum Reinigen eines Filters mit hochtemperaturfesten, keramischen Filterkerzen,
**dadurch gekennzeichnet,**
**dass** schmutzseitig ungereinigtes Produktgas abgesaugt wird und dass annähernd zeitgleich gereinigtes Produktgas auf der sauberen Seite der Filterkerzen in diese eingebracht wird.

10. Filter nach Anspruch 9,
**dadurch gekennzeichnet,**
**dass** das ungereinigte Produktgas pulsartig abgesaugt wird.
